# EUROPEAN PATENT SPECIFICATION

(11) **EP 1 740 419 B1**
(45) Date of publication and mention of the grant of the patent: **18.02.2009**
(21) Application number: 05720100.6
(22) Date of filing: 01.03.2005
(51) Int. Cl.: B60R 25/00

(54) **ANTITHEFT APPARATUS FOR VEHICLE AND VEHICLE ANTITHEFT SYSTEM**
DIEBSTAHLSCHUTZVORRICHTUNG FÜR FAHRZEUG UND FAHRZEUG-DIEBSTAHLSCHUTZSYSTEM
APPAREIL ANTIVOL POUR VEHICULE ET SYSTEME D'ANTIVOL POUR VEHICULE

(30) Priority: 09.03.2004 JP 2004066058
(43) Date of publication of application: 10.01.2007
(73) Proprietor: TOYOTA JIDOSHA KABUSHIKI KAISHA, Toyota-shi, Aichi-ken, 471-8571 (JP)
(72) Inventor: ENDO, Takeo, TOYOTA JIDOSHA KABUSHIKI KAISHA, Toyota-shi, Aichi 4718571 (JP); MASAMURA, Kouichi, TOYOTA JIDOSHA KABUSHIKI KAISHA, Toyota-shi, Aichi 4718571 (JP); NAKANE, Yoshihide, TOYOTA JIDOSHA KABUSHIKI KAISHA, Toyota-shi, Aichi 4718571 (JP); OZAWA, Takao, TOYOTA JIDOSHA KABUSHIKI KAISHA, Toyota-shi, Aichi 4718571 (JP)
(74) Representative: TBK-Patent
(86) International application number: PCT/JP2005/003828
(87) International publication number: WO 2005/085019

(56) References cited:
- US-A- 6 122 580
- US-A1- 2002 105 444
- US-B1- 6 480 117

## Description

### TECHNICAL FIELD

This invention relates generally to an antitheft apparatus for a vehicle using an immobilizer, and more particularly to an antitheft apparatus for a vehicle and a vehicle antitheft system, which enable remote recognition of immobilizer identification (ID) codes registered on the vehicle.

### BACKGROUND ART

An immobilizer, which is an electronic movement-locking device mainly intended for antitheft, is known as a security system for a vehicle. In Europe, immobilizers have been required to be installed into vehicles as standard equipment since 1997. In Japan, the number of vehicles equipped with an immobilizer is on the rise.

In an immobilizer, a small electronic communications chip referred to as a transponder is embedded into (a grip of) a vehicle key. When such key is fitted into a key cylinder of the vehicle, a user ID code pre-stored in the transponder is transmitted to an antenna built in the key cylinder and read out. The read-out user ID code is then checked whether or not it is identical to a reference ID code pre-stored in an ECU of the vehicle. If these ID codes are identical, it is then certified that the key used is valid, allowing ignition of its engine and/or injection of fuel. On the other hand, if the ID codes are not identical, the ignition of the engine and the injection of fuel are then not allowed, preventing start-up of the engine with the key.

In the immobilizer system, to add or delete the valid key, it is required to register the ID code unique to the key into the vehicle or delete the registered ID code unique to the key from the vehicle. In adding or deleting the valid key, a system is proposed in which a sub key can be registered only when a master key (or a main key) is certified. See, for example, JP8-268228A, or JP2001-71868A.

However, in the conventional antitheft apparatus for a vehicle using the immobilizer as described above, the valid keys are managed locally in the vehicle. Therefore, to know the keys registered on a certain vehicle, such keys have to be read out locally from that vehicle.

Such conventional system in which the registered keys cannot be seen from outside of the vehicle may lead to some disadvantages. Two illustrative scenarios are now described.

One illustrative scenario is a case where a valid vehicle user commits insurance fraud in which the user tries to receive an insurance payment from an insurance company for the reason that the user's vehicle is stolen even though that is not true. Typically, the insurance company is supposed to collect all keys of the stolen vehicle from the vehicle user when paying the insurance money to the user. Therefore, if the defrauding vehicle user conceals his/her vehicle by, for example, temporarily leaving it with someone and submits fake keys, which look like the valid keys in appearance, to the insurance company, the latter cannot determine whether or not the submitted keys are valid keys of which ID codes are registered on the stolen vehicle.

Another illustrative scenario is a case where the valid vehicle user having actually his/her vehicle stolen, which vehicle is provided with the immobilizer, properly receives the insurance payment from the insurance company. Since in general the vehicle with the immobilizer is more difficult to be stolen than a vehicle without it, the insurance company may conduct a relatively careful investigation over a claim for insurance from the vehicle user in other perspectives than the keys in order to determine whether or not the claim is insurance fraud as described above. Thus, when the vehicle is stolen, it may happen that it takes longer time for the valid user of the vehicle with the immobilizer to properly receive the insurance payment than the valid user of the vehicle without the immobilizer.

Furthermore, with the above conventional antitheft apparatus for a vehicle using the immobilizer, it is required to use a dedicated reader when one reads out the registered ID codes from the vehicle locally.

Another prior art is US-A-6 122 580 showing an apparatus for driver-specific setting of vehicle devices that has setting parameters stored as a setting-parameter data set in a local processor. Action signals are transmitted, via a control and/or regulating apparatus, to the devices, from which sensor signals may be fed back into the control and/or regulating apparatus. The local processor reports the respective identifier and a vehicle identification of the respectively used vehicle via a data radio link to a central processor, which enters them into a key-use register and stores the respectively associated setting-parameter set and possibly other useful data as operating information. This keeps them ready for an evaluation.

US-B1-6 480 117 shows a control system for a vehicle including a controller for learning a unique code of a token to define a learned token capable of causing performance of a function associated with the vehicle, for example. The controller performs remote token verification to generate an indication relating to whether a new uniquely coded token has been learned by the controller. The control system is advantageously used for a vehicle security system also enabling starting of the vehicle. The token may also include at least one first electrical conductor for electrically connecting to at least one second electrical conductor included in a token reader. In one embodiment, the token verification is based upon the controller being recently entered into the token learning mode. According to another embodiment, the token verification is based upon a number of learned tokens, a change in that number, or a change in a learned code of a token. The indication may be provided at the vehicle or remote there from by any of a light, a visual display, a vibration transducer, a speech message generator, and an audible signal generator, for example.

### DISCLOSURE OF THE INVENTION

To solve the above-mentioned problems, it is a main object of this invention to provide an antitheft apparatus for a vehicle and a vehicle antitheft system, which enable remote recognition of the immobilizer ID codes registered on the vehicle.

This object is achieved by an apparatus and a system as outlined in the attached claims.

### BRIEF DESCRIPTION OF THE DRAWINGS

The foregoing and other objects, features, and advantages of the present invention will become apparent upon reading the following detailed description and upon reference to the drawing in which:

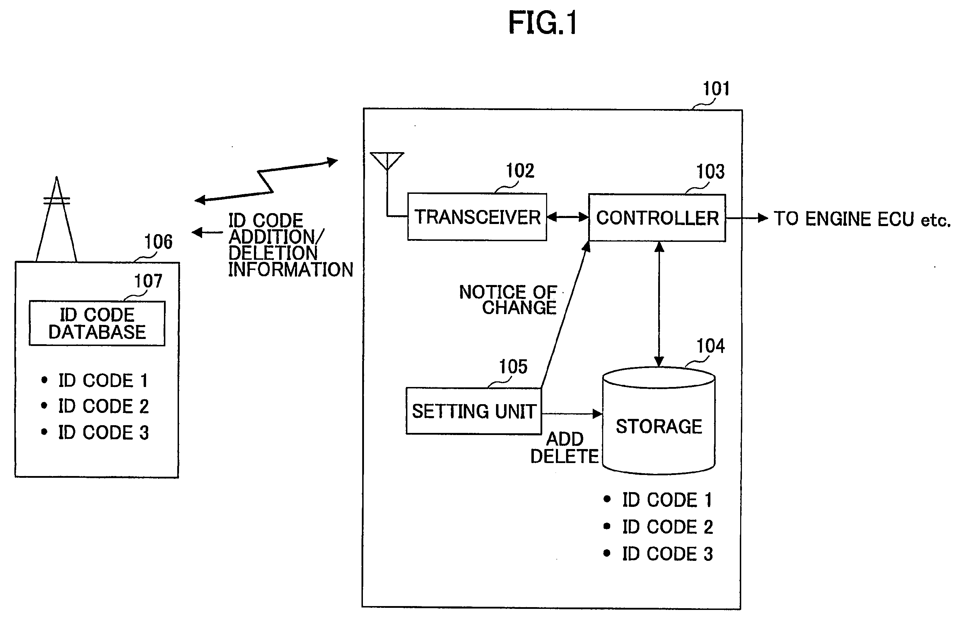

FIG. 1 is a schematic view showing an antitheft apparatus for a vehicle according to an embodiment of the present invention.

### PREFERRED EMBODIMENTS FOR CARRYING OUT THE INVENTION

A preferred embodiment of the present invention is now described with reference to the appended drawing. Note that the basic concept, the main hardware configuration, the principle of operation, and the basic control scheme of the antitheft apparatus for a vehicle using the immobilizer are not described in detail in the following description because such matters are known to the skilled person in the art.

Fig. 1 schematically shows an antitheft apparatus for a vehicle according to this embodiment.

The antitheft apparatus for a vehicle 101 is installed on a vehicle and includes a transceiver 102, a controller 103 (e.g. an ECU), storage 104 (e.g. a storage media such as a memory), and a setting unit 105 for registering or deleting identification (ID) codes.

The transceiver 102 can communicate with a center 106, which center is an authorized communications station that can perform radio communication. The center 106 is provided with an ID code database 107, which database is configured to associate the registered ID codes transmitted from the vehicle with the latter and to store them.

The controller 103 is configured to control an immobilizer system and has a function to check whether or not a user ID code pre-stored in a transponder of a vehicle key fitted into a key cylinder of the vehicle and a reference ID code stored in the storage 104 are identical and to send a command to disable the starting-up of the engine to the engine ECU and the like when the user ID code and the reference ID code are not identical.

The setting unit 105 is configured to register (add) a new reference ID code to the storage 104 and to delete the registered reference ID code from the storage 104, based on the user's request.

The antitheft apparatus for a vehicle 101 of this embodiment has the above-mentioned components. Next, the operation of the antitheft apparatus 101 of this embodiment is described.

When the setting unit 105 newly or additionally registers the ID code to the storage 104, the setting unit 105 notifies the controller 103 of the registration of the ID code. When the controller 103 receives the notice of registration of the ID code, the controller 103 transmits information relating to the newly or additionally registered ID code, which is referred to as "ID code addition information" hereinafter, to the center 106 in communication data via the transceiver 102.

The ID code addition information may include the ID code itself newly or additionally registered in the storage 104, or information for identifying the newly or additionally registered ID code.

When the center 106 receives the ID code addition information from the vehicle, the center 106 associates the ID code indicated in the received ID code addition information with the vehicle from which the ID code addition information is transmitted and stores them in the ID code database 107.

On the other hand, when the setting unit 105 deletes the registered ID code from the storage 104, the setting unit 105 notifies the controller 103 of the deletion of the ID code. When the controller 103 receives the notice of deletion of the ID code, the controller 103 transmits information relating to the deleted ID code, which is referred to as "ID code deletion information" hereinafter, to the center 106 in communication data via the transceiver 102.

The ID code deletion information may include the ID code itself deleted from the storage 104, or information for identifying the deleted ID code.

When the center 106 receives the ID code deletion information from the vehicle, the center 106 deletes the ID code indicated in the received ID code deletion information from a field for the vehicle from which the ID code deletion information is transmitted in the ID code database 107.

The above-mentioned transmission of the ID code addition/deletion information from the antitheft apparatus 101 to the center 106 occurs each time the ID codes registered in the storage 104 are changed by the setting unit 105. Thus, for each vehicle, the ID codes registered locally on the vehicle and the ID codes stored in the center 106 are kept identical. Consequently, the ID codes currently registered on a certain vehicle can be easily recognized by making reference to the ID code database 107.

In an example shown, by way of example, the ID Codes 1-3 are stored in the storage 104, and accordingly the same ID Codes 1-3 are stored in the ID code database 107 of the center 106 as the registered ID codes. In this example, assuming that the setting unit 105 adds the ID Code 4 (not shown) to the storage 104, the ID code addition information requesting the addition of the ID Code 4 to the ID code database 107 is then transmitted to the center 106. Further, in this example, assuming that the setting unit 105 deletes the ID Code 1 from the storage 104, the ID code deletion information requesting the deletion of the ID Code 1 from the ID code database 107 is then transmitted to the center 106.

Thus, according to this embodiment, the immobilizer ID codes currently registered on each vehicle can be easily seen from outside of the vehicle without any dedicated reader.

The ID codes currently registered on each vehicle can be found in such manner and may be used by, for example, the insurance company. If the insurance company includes the center 106 of this embodiment or can receive information from the center 106 of this embodiment, the insurance company can then easily and quickly determine whether or not a claim for insurance payment is valid when a user of a vehicle with the immobilizer makes a claim for insurance payment for the reason that his/her vehicle is stolen, by demanding that the user submits the registered keys of the vehicle.

The insurance company can easily recognize all registered ID codes (and also the total number of the registered ID codes) of the vehicle supposed to have been stolen according to the user claiming the insurance payment by making reference to the ID code database 107 for that vehicle. Then, the insurance company can check whether or not the ID codes stored in the transponders of the keys submitted by the claiming user are identical to the registered ID codes known from the ID code database 107. Therefore, the insurance company can determine that the claim for the insurance payment is valid when the user ID codes stored in the transponders of the keys submitted by the claiming user are identical to the registered reference ID codes known from the ID code database 107 and when the total number of the user ID codes is identical to the total number of the reference ID codes. Consequently, the insurance company can find out a possibility of the insurance fraud when the user ID codes includes one or more ID codes that are not included in the reference ID codes or vice versa, or when the total number of the user ID codes is not identical to the total number of the reference ID codes.

This is advantageous for both the insurance company and the valid vehicle user claiming the insurance payment because the insurance company can easily find out the invalid insurance claim and the investigation for the insurance payment may be quickly finished so that the valid claiming user may quickly receive the insurance money.

In this embodiment, by way of example, an illustrative case where the ID code database 107 is located in the center 106 is described. However, the present invention is not limited to this and a case where the ID code database 107 is located in a remote station in communication with the center 106 is also within the scope of the present invention.

The present invention is applicable to any antitheft apparatus for a vehicle using the immobilizer and to any vehicle antitheft system using such apparatus. The present invention does not depend on visual design, weight, size, and performance of driving of the vehicle on which the antitheft apparatus of the present invention is installed.

## Claims

1. An antitheft apparatus for a vehicle, which is installed on a vehicle **(101)** and configured to allow operation of predetermined on-vehicle devices only when a user ID code obtained from a user of the vehicle and a reference ID code registered on the vehicle are identical, comprising:
a setting unit **(105)** for adding or deleting the reference ID code to or from the vehicle; and,
a transmitting unit **(102)** for transmitting the reference ID code registered on the vehicle to a predetermined communications station **(106);**
**characterized in that**:
when a new reference ID code is added to or a registered reference ID code is deleted from the vehicle via said setting unit, said transmitting unit transmits information relating to the added new reference ID code or the deleted registered reference ID code to said predetermined communications station.

2. The antitheft apparatus for a vehicle according to claim 1, **characterized in that**: said user ID code is an ID code registered on a vehicle key.

3. A vehicle antitheft system comprising the antitheft apparatus for a vehicle according to any one of the preceding claims and a communications station for communicating with said antitheft apparatus for a vehicle,
**characterized in that**:
said communications station is configured to associate the added new ID code, on the basis of the addition information of the reference ID code transmitted from said transmitting unit of the antitheft apparatus for a vehicle, with the vehicle from which the addition information is transmitted and to then store it into a database (107), and is also configured to delete the deleted registered reference ID code, on the basis of the deletion information of the reference ID code transmitted from said transmitting unit of the antitheft apparatus for a vehicle, from the database into which it is stored with being associated with the vehicle from which the deletion information is transmitted.

4. An antitheft apparatus for a vehicle according to the claim 1 or 2, **characterized in that**: said predetermined communications station is a center performing radio communication.

## Patentansprüche

1. Diebstahlschutzvorrichtung für ein Fahrzeug, die an einem Fahrzeug (101) angeordnet ist und die dazu eingerichtet ist, den Betrieb von vorher festgelegten am Fahrzeug befindlichen Geräten nur zu erlauben, wenn ein von einem Benutzer des Fahrzeugs erhaltener Benutzer ID Code und ein am Fahrzeug registrierter Referenz ID Code identisch sind, mit:
einer Einstellungseinheit (105) zum Hinzufügen oder Löschen des Referenz ID Codes zum oder vom Fahrzeug; und,
einer Übertragungseinheit (102) zum Übertragen des am Fahrzeug registrierten Referenz ID Codes zu einer vorher festgelegten Kommunikationsstation (106);
**dadurch gekennzeichnet, dass**:
wenn über die Einstellungseinheit ein neuer Referenz ID Code zum Fahrzeug hinzugefügt oder ein registrierter Referenz ID Code vom Fahrzeug gelöscht wird, die Übertragungseinheit Informationen in Bezug auf den hinzugefügten neuen Referenz ID Code oder den gelöschten registrierten Referenz ID Code zu der vorher festgelegten Kommunikationsstation überträgt.

2. Diebstahlschutzvorrichtung für ein Fahrzeug gemäß Anspruch 1, **dadurch gekennzeichnet, dass**: der Benutzer ID Code ein an einem Fahrzeugschlüssel registrierter ID Code ist.

3. Fahrzeugdiebstahlschutzsystem mit der Diebstahlschutzvorrichtung für ein Fahrzeug gemäß einem der vorangehenden Ansprüche und eine Kommunikationsstation zum Kommunizieren mit der Diebstahlschutzvorrichtung für ein Fahrzeug,
**dadurch gekennzeichnet, dass**:
die Kommunikationsstation eingerichtet ist, den hinzugefügten neuen ID Code auf der Basis der von der Übertragungseinheit der Diebstahlschutzvorrichtung für ein Fahrzeug übertragenen Zusatzinformation des Referenz ID Codes mit dem Fahrzeug zu verknüpfen, von dem die Zusatzinformation übertragen wird und diesen dann in einer Datenbank (107) zu speichern, und die auch dazu eingerichtet ist, den gelöschten registrierten Referenz ID Code auf der Basis der von der Übertragungseinheit der Diebstahlschutzvorrichtung für ein Fahrzeug übertragenen Löschinformation des Referenz ID Codes aus der Datenbank zu löschen, in der dieser mit einer Verknüpfung mit dem Fahrzeug, von dem die Löschinformation übertragen wird, gespeichert ist.

4. Diebstahlschutzvorrichtung für ein Fahrzeug gemäß Anspruch 1 oder 2, **dadurch gekennzeichnet, dass**: die vorher festgelegte Kommunikationsstation eine Zentrale zum Durchführen einer Funkkommunikation ist.

## Revendications

1. Dispositif antivol pour un véhicule, qui est installé sur un véhicule (101) et configuré pour permettre le fonctionnement de dispositifs prédéterminés embarqués sur le véhicule uniquement lorsqu'un code d'identification d'utilisateur obtenu d'un utilisateur du véhicule et un code d'identification de référence enregistré sur le véhicule sont identiques, comprenant :
une unité de réglage (105) pour ajouter le code d'identification de référence au véhicule ou l'effacer de celui-ci ; et
une unité d'émission (102) pour émettre le code d'identification de référence enregistré sur le véhicule vers une station de communication (106) prédéterminée ;
**caractérisé en ce que**
lorsqu'un nouveau code d'identification de référence est ajouté au véhicule ou lorsqu'un code d'identification de référence enregistré est effacé de celui-ci par l'intermédiaire de ladite unité de réglage, ladite unité d'émission émet des informations concernant le nouveau code d'identification de référence ajouté ou le code d'identification de référence enregistré effacé vers ladite station de communication prédéterminée.

2. Dispositif antivol pour un véhicule selon la revendication 1, **caractérisé en ce que** ledit code d'identification d'utilisateur est un code d'identification enregistré dans une clé de véhicule.

3. Système antivol de véhicule, comprenant le dispositif antivol pour un véhicule selon l'une quelconque des revendications précédentes et une station de communication pour communiquer avec ledit dispositif antivol pour un véhicule,
**caractérisé en ce que**
ladite station de communication est configurée pour associer le nouveau code d'identification ajouté, sur la base des informations d'ajout du code d'identification de référence émises par ladite unité d'émission du dispositif antivol pour un véhicule, au véhicule à partir duquel les informations d'ajout sont émises et pour le mémoriser ensuite dans une base de données (107), et est également configurée pour effacer le code d'identification de référence enregistré effacé, sur la base des informations d'effacement du code d'identification de référence émises par ladite unité d'émission du dispositif antivol pour un véhicule, de la base de données dans laquelle il est mémorisé en étant associé au véhicule à partir duquel les informations d'effacement sont émises.

4. Dispositif antivol pour un véhicule selon la revendication 1 ou 2, **caractérisé en ce que** ladite station de communication prédéterminée est un centre effectuant une communication radio.
